Europäisches Patentamt

European Patent Office

Office européen des brevets

(19)

(11) **EP 1 443 033 A1**

(12) **EUROPEAN PATENT APPLICATION**
published in accordance with Art. 158(3) EPC

(43) Date of publication:
04.08.2004 Bulletin 2004/32

(21) Application number: 02777810.9

(22) Date of filing: 04.10.2002

(51) Int Cl.⁷: **C04B 41/85**, F27D 1/00

(86) International application number:
**PCT/JP2002/010348**

(87) International publication number:
**WO 2003/031374 (17.04.2003 Gazette 2003/16)**

(84) Designated Contracting States:
**AT BE BG CH CY CZ DE DK EE ES FI FR GB GR
IE IT LI LU MC NL PT SE SK TR**

(30) Priority: 04.10.2001 JP 2001309010

(71) Applicant: **Kitakyushu Foundation for the
Advancement of Industry, Science and
Technology
Fukuoka 804-0003 (JP)**

(72) Inventors:
• SHIROMIZU, Yoshinobu
Kitakyushu-shi, Fukuoka 807-0841 (JP)
• TAO, Zainan
Kitakyushu-shi, Fukuoka 806-0056 (JP)

(74) Representative: **Hössle Kudlek & Partner
Patentanwälte,
Postfach 10 23 38
70019 Stuttgart (DE)**

(54) **REFRACTORY FOR FURNACE AND FURNACE AND METHOD FOR SURFACE TREATING FURNACE WALL**

(57)     A film for preventing a refractory deterioration is formed on the surface of refractory for a refuse incinerator. Since the preventive film exhibits high adhesion resistance to clinker generated in the incinerator, clinker does not adhere to the film easily. Since the preventive film is composed of fine and dence inorganic oxide based ceramics, surface layer of a brick body is covered with a film harder than the body. Consequently, wear resistance of refractory brick is enhanced. Since a corrosion resistant film exists on the surface of the body, intrusion of chloride gas is suppressed effectively, even if the body is exposed to chloride gas. Even an inexpensive fireclay brick is protected against adhesion of clinker and spalling, and use period of refractory brick is prolonged.

Fig.1

EP 1 443 033 A1

**Description**

**FIELD OF THE INVENTION**

The present invention relates generally to a refractory for a furnace member, a furnace and a method for applying a surface treatment onto a furnace wall, and more specifically to a refractory, a refractory for furnace member which can enhance a durability of the furnace having said refractory employed in its furnace wall, a furnace and a method for applying a surface treatment onto the furnace wall.

**DESCRIPTION OF THE PRIOR ART**

One known type of refractory includes a fireclay refractory, such as brick and monolithic refractory. The fireclay refractory is inexpensive and there is an abundant source material available therefor in natural resources. In addition, taking advantage of varieties of fireclay depending on its production area, the fireclay refractory is currently employed for furnace walls in many different types of industrial furnaces.

The fireclay refractory is, however, typicallymore likely corroded by chlorine gas, sulfuric gas and other gases containing a variety type of alkaline components. Further disadvantageously, owing to its porousness, the fireclay refractory is subject to damages from an adhesion of ash contents of low melting point, including clinkers in the case of a refuse incinerator, dusts in the case of a cement burning furnace and slugs in the case of a steel making furnace as well as from a contact with a water vapor. A synergistic action from all of the corrosion from the corrosive gases, the adhesion of the ash contents on the surface and the thermal stress associated with the varying temperature within the furnace may generate a spalling in a surface layer of the fireclay refractory, which may in turn reduce a lifetime of the fireclay refractory, thus restricting the range of its application. For example, a primary factor in decay of the fireclay refractory incorporated in the furnace wall of the refuse incinerator has been found to be the spalling developed through the synergistic action from the corrosion by the chlorine gas, the adhesion of the clinkers and the rapid change in the temperature. The clinkers mentioned herein refer to a resultant material which is formed in such a manner that the ash contents generated in burning operation, including bottom ash and fly ash, have been deposited on the surface layer of the furnace wall of the refuse incinerator, and further a molten salt (an eutectic salt) of low melting point has been generated and adhered thereon.

As described above, since the fireclay refractory is essentially porous, the ash contents as well as the base metals (substances subject to thermal processing in the steel making furnace) are more likely to adhere onto the surface of the fireclay refractory during the operation of the furnace. Those ash contents and base metals are removed during the maintenance work of the furnace in order to avoid the spalling. The effort for this removing work, however, typically needs an immense cost and time. Further disadvantageously, the work in the furnace should be carried out in narrow space under high temperature condition. Due to this, it has been difficult to maintain the health and ensure the safety of the workers.

To address this, such a refractory as a high-purity aluminous refractory, a silicon carbide refractory and a refractory brick containing carbon has been conventionally developed to provide one solution to those problems.

However, in the current situation, all of those conventional high-purity aluminous refractory, silicon carbide refractory and refractory brick containing carbon are rather expensive and consequently have failed to provide an ultimately powerful solution to the above-pointed problems, as is the case of the method for optimizing the operational method of the furnace.

**SUMMERY OF THE INVENTION**

An object of the present invention is to provide a refractory for a furnace member, a furnace and a method for applying a surface treatment onto a furnace wall, which can satisfy the requirements for preventing a corrosion in a surface layer of the refractory by a corrosive gas, for preventing an adhesion of ash contents of substances subject to thermal processing onto a surface of the refractory and also for improving a wear resistance of the refractory, all at the same time with yet low cost.

According to a first invention, there is provided a refractory for a furnace member comprising: a refractory used for a furnace member; and a film for preventing refractory deterioration formed on a surface of said refractory used for said furnace member, which can prevent a corrosion in said refractory by a corrosive gas that is corrosive to said refractory and also can prevent substances that have been thermal-processed in said furnace and/or ash contents resultant from said substances from adhering onto said surface of said refractory.

The refractory may include an alumina refractory, a magnesia refractory (including a magnesia-chrome refractory and a magnesia-carbon refractory), a silica refractory (a fireclay refractory) and aluminous refractory. Among them, commonly used is an inexpensive chamotte brick having the fire resistance (SK) defined in a range of 32-37.

The type of furnace to which the present invention is to be applied is not limited to specific ones. The furnace may include various types of industrial furnaces represented, by way of example only, a refuse incinerator, a cement burning furnace, an annealing furnace, a heating furnace and a steel making furnace. The steel making furnace may include, for example, a blast furnace, a steel converter, an electric furnace, a steel runner, a ladle, a tundish, a RH (a steel making vacuum degassing device) and a DH. The refractory of the present invention may be applicable not only to the furnace but also to its peripherals.

The corrosive gas may include, for example, a chlorine gas, a sulfuric gas and a gas containing variety types of alkaline components.

The substance subject to the thermal processing in the furnace may be broadly different, depending on, for example, the type of furnace that is furnished with said refractory. It may include, for example, a variety of garbage to be incinerated in case of the refuse incinerator, and a variety of source materials for the cement to be burnt, including limestone, clay and silica sand, in case of the cement burning furnace. It may also include a variety of materials used in steel making, such as iron ore, coke, limestone and manganese ore, in the case of the steel making furnace. The substances subject to the thermal processing referred herein may include such base metal that has been fused and has adhered onto the refractory within the steel making furnace.

The ash contents from the substances subject to the thermal processing may include, forexample, a clinker discharged from the refuse incinerator, a coating discharged from the cement burning furnace and a slug discharged from the steel making furnace.

A film for preventing refractory deterioration is such a coating film containing both of (1) a material that can effectively suppress the corrosion in said refractory by the corrosive gas and (2) a material that can prevent the substances subject to the thermal processing and/or the ash contents from said substances from adhering onto the surface of the refractory. Among those materials, the material exhibiting a corrosion resistance as defined in (1) may employ ceramics of inorganic oxides, for example. On the other hand, the material exhibiting an adhesion preventing property may employ ceramics of carbides, ceramics of nitrides and carbons, for example.

According to a second invention there is provided a refractory for a furnace member comprising: a refractory used for a furnace member; an corrosion resistant film formed on a surface of said refractory for preventing a corrosion in said refractory by a corrosive gas that is corrosive to said refractory; and an adhesion preventive film formed on top of said corrosion resistant film for preventing substances that have been thermal-processed in said furnace and/or ash contents resultant from said substances from adhering onto said surface of said refractory.

The material used to form the corrosion resistant film is not limited to specific ones. For example, it may employ inexpensive ceramics of inorganic oxides, including specifically $SiO_2$, $ZrSiO_4$, $2SiO_2 \cdot 3Al_2O_3$, $ZrO_2$, $Cr_2O_3$, $TiO_2$, $MgO$, $MgAl_2O_4$ and $B_2O_3$.

A film thickness of the corrosion resistant film may be in a range of 10 to 1000 μm, preferably in a range of 100 to 300 μm. With the thickness lower than 10 μm, the corrosion resistant film could not suppress the corrosion by the corrosive gas effectively. In contrast, with the thickness greater than 1000 μm, the corrosion resistant film is apt to result in a separation from the surface of the refractory.

An apparent porosity of the corrosion resistant film may be not greater than 10%, preferably not greater than 5%. With the apparent porosity greater than 10%, disadvantageously the corrosion resistant film is no more able to prevent the corrosion by the corrosive gas effectively.

The material used to form the adhesion preventive film is not limited to specific ones. For example, it may employ ceramics of carbides, ceramics of nitrides, and carbons. The ceramics of carbides may include, for example, SiC, ZrC, $W_2C$ and WC, which are inexpensive. The ceramics of nitrides may include, for example, $Si_3N_4$, TiN and ZrN. Besides, the carbons may include coke and graphite.

The thickness of the adhesion preventive film may be in a range of 300 to 2000 μm, preferably in a range of 1000 to 1500 μm. With the thickness lower than 300 μm, the life of the adhesion preventive film could be shorter due to the oxidation. In contrast, with the thickness greater than 2000 μm, disadvantageously the flaking-off of the adhesion preventive film due to a thermal stress resultant from severe fluctuation of heat is more apt to occur.

The method of forming the corrosion resistant film is not limited to specific ones. In one exemplary method, the corrosion resistant film f orming material having a f lowability may be applied over the surface of the refractory by means of spraying or with a painting brush. Alternatively, a corrosion resistant film that has been previously manufactured in the form of film may be affixed over the surface of the refractory. Besides, the method of forming the adhesion preventive film is not limited to specific ones. In one exemplary method, the adhesion preventive film forming material may be applied over the corrosion resistant film similarly by way of spraying or with a painting brush. Furthermore, the adhesion preventive film that has been previously manufactured in the form of film may be affixed on top of the corrosion resistant film.

It is more preferable that interface layers may be interposed between the refractory and the corrosion resistant film as well as between the corrosion resistant film and the adhesion preventive film, respectively, each of said interface layers defining a gradient composition, in which a blending ratio of respective components of one to the other of said two adjacent members is proportionally reduced in accordance with the transition from one side to the other of said two adjacent members. Those interface layers may be formed through a natural generation at the furnace temperature in a range of 800 to 1400°C, or in one alternative way, during the manufacturing of the refractory for the furnace member, the refractory coated with those films may be placed in the heat treating furnace, where it may be heat treated at the temperature of 1000 to 1400°C to cause a diffusion and chemical reaction of adjacent respective members to thereby form the interface layers. The presence of those interface layers may enhance tight adhesion between the refractory and respective films.

A third invention provides a refractory for a furnace member in accordance with the second invention, in which a main component of said corrosion resistant film is represented by ceramics of inorganic oxides.

The type of ceramics of the inorganic oxides is not limited to specific ones.

A fourth invention provides a refractory for a furnace member in accordance with the third invention, in which said ceramics of inorganic oxides contains at least one component selected from a group consisting of $SiO_2$, $ZrSiO_4$, $2SiO_2 \cdot 3Al_2O_3$, $ZrO_2$, $Cr_2O_3$, $TiO_2$, $MgAl_2O_4$ and $B_2O_3$.

One type, or two or more types in combination, of the ceramics of inorganic oxides may be used. In using two or more types of the ceramics in combination, the blending ratio thereof may be arbitrarily determined.

A fifth invention provides a refractory for a furnace member in accordance with the second invention, in which a main component of said adhesion preventive film is represented by at least one component selected from a group consisting of ceramics of carbides, ceramics of nitrides, ceramics of borides and carbons.

The ceramics of carbides may be used alone. Alternatively, the ceramics of nitrides may be used alone. Further alternatively, the carbons may be used alone. Yet alternatively, the combination of the ceramics of carbides with the ceramics of nitrides may be exclusively used. The combination of the ceramics of carbides with the carbons may be exclusively used also. Further alternatively, the combination consisting of the ceramics of carbides, the ceramics of nitrides and the carbons may be used.

A sixth invention provides a refractory for a furnace member in accordance with the fifth invention, in which said ceramics of carbides contain at least one component selected from a group consisting of SiC, ZrC, TiC, $B_4C$, $W_2C$ and WC.

The ceramics of carbides may employ only one type thereof or two or more types thereof in combination. In case of using two or more types of the ceramics of carbides in combination, the blending ratio thereof may be arbitrary determined.

A seventh invention provides a refractory for a furnace member in accordance with the fifth invention, in which said ceramics of nitrides contain at least one component selected from a group consisting of $Si_3N_4$, TiN, BN, and ZrN.

The ceramics of nitrides may employ only one type thereof or two or more types thereof in combination. In case of using two or more types of the ceramics of nitrides in combination, the blending ratio thereof may be arbitrary determined.

An eighth invention provides a refractory for a furnace member in accordance with the fifth invention, in which said ceramics of borides contain at least one component selected from a group consisting of $B_4C$, BN, $TiB_2$, $CrB_2$, $ZrB_2$ and $SiB_2$.

A ninth invention provides a refractory for a furnace member in accordance with the fifth invention, in which said adhesion preventive film has been added with an oxidation inhibitor.

According to a tenth invention, there is provided a furnace comprising: a refractory defining a furnace wall; an corrosion resistant film formed on a surface of said refractory for preventing a corrosion in said refractory by a corrosive gas that is corrosive to said refractory; and an adhesion preventive film formed on top of said corrosion resistant film for preventing substances that have been thermal-processed in said furnace and/or ash contents resultant from said substances from adhering onto said surface of said refractory.

The surface of the furnace wall to be coated with those corrosion resistant film and adhesion preventive film defines an interior surface of the furnace that maybe brought into contact with the substance subject to thermal processing. However, it is to be noted that the furnace wall is mot limited to the above but it may include an exterior surface of the furnace, for example.

An eleventh invention provides a furnace in accordance with the tenth invention, in which a main component of said corrosion resistant film is represented by ceramics of inorganic oxides.

A twelfth invention provides a furnace in accordance with the tenth invention, in which a main component of said adhesion preventive film is represented by at least one component selected from a group consisting of ceramics of carbides, ceramics of nitrides, ceramics of borides and carbons.

A thirteenth invention provides a furnace in accordance with any one of the tenth through the twelfth inventions, in which said furnace is represented by one furnace selected from a group consisting of a refuse incinerator, a cement burning furnace, an annealing furnace, a heating furnace and a steel making furnace.

According to a fourteenth invention, there is provided a method for applying a surface treatment onto a furnace wall comprising the processes of: applying, by way of spraying, a material for forming a corrosion resistant film over a surface of a refractory defining a furnace wall to form an corrosion resistant film for preventing a corrosion in said refractory by a corrosive gas that is corrosive to said refractory; applying, by way of spraying, a material for forming an adhesion preventive film on top of said corrosion resistant film obtained in the previous process to form an adhesion preventive film for preventing substances that have been thermal-processed in a furnace and/or ash contents resultant from said substances from adhering onto said surface of said refractory; and drying said applied material for forming said adhesion preventive film.

The viscosity of the material used to form the corrosion resistant film is not limited to specific values. However, preferably the viscosity thereof should be in a range of 50 to 3000 cP, most preferably in a range of 100 to 250 cP. With the viscosity lower than 50 cP, there will be somewhat disadvantages, such as a bad stability of the material used to form the dispersed corrosion resistant film or an insufficient amount of contents of solid components. In contrast, with the viscosity higher than 3000 cP, there will be somewhat another disadvantage such as a defective condition in forming the corrosion resistant film by spraying or an unsatisfactory adhesion between the corrosion resistant film and the refractory. It is more preferable that the material used to form the corrosion resistant film should be added with a sintering accelerator.

The viscosity of the material used to form the adhesion preventive film is not limited to specific values. However, preferably the viscosity thereof should be in a range of 1000 to 3000 cP, most preferably in a range of 2000 to 2500 cP. With the viscosity lower than 1000 cP, there will be somewhat disadvantages, such as a difficulty in dispersing the ceramics of carbides as well as the ceramics of nitrides in a stable manner. In contrast, with the viscosity higher than 3000 cP, there will be somewhat another disadvantage such as a bad adhesion between the corrosion resistant film and the adhesion preventive film.

Preferably, a percentage content of solid components in the material used to form the adhesion preventive film is not smaller than 60%. With the content lower than 60%, a fineness and density in the adhesion preventive film will be deteriorated, and there will be exhibited somewhat such a disadvantage that the life of the film will be shorter.

It is more preferable that the material used to form the adhesion preventive film should be added with the oxidation inhibitor.

The application of the material used to form the corrosion resistant film and the material used to form the adhesion preventive film by means of spraying may be performed, by way of example, in the air spray system for injecting a compressed air or in the airless spray system for compressing and thereby atomizing those materials directly. Typically, a spray gun is used for the application thereof.

The method of drying the material used to form the corrosion resistant film as well as the material used to form the adhesion preventive film is not limited to specific ones. In one exemplary method, the air-drying or the forced drying at a temperature slightly higher than that for the air-drying may be used. Further, the drying by heating using a radiation of the infrared ray, for example, may be employed. The draying time may be appropriately determined in accordance with the particular drying method that has been employed.

A fifteenth invention provides a method for applying a surface treatment onto a furnace wall in accordance with the fourteenth invention, in which a main component of said material for forming said corrosion resistant film is represented by ceramics of inorganic oxides.

The particle size of the ceramics of inorganic oxides may be in a range of 0.01 to 2 $\mu$m, preferably in a range of 0.01 to 0.1 $\mu$m. With the diameter smaller than 0.01 $\mu$m, disadvantageously the cost will be increased. In contrast, with the diameter greater than 2 $\mu$m, the adhesion between the corrosion resistant film and the refractory will be deteriorated and also the stability of the material used to form the corrosion resistant film will be reduced.

A sixteenth invention provides a method for applying a surface treatment onto a furnace wall in accordance with the fourteenth invention, in which said material for forming said corrosion resistant film has been added with a sintering accelerator.

The type of the sintering accelerator is not limited to specific ones. The sintering accelerator of $Al_2O_3$-$SiO_2$-$B_2O_3$-$ZrO_2$ type or $Al_2O_3$-$SiO_2$-$B_2O_3$ type, for example, may be employed. Other sintering accelerator, such as, various types of low melting point glass, fine powder glass may be used.

The amount of the sintering accelerator to be added may be not higher than 10% by weight, preferably not higher than 2% by weight. With the adding amount over 10% byweight, the durability of the corrosion resistant film in itself against the high temperature will be deteriorated, leading to a shorter lifetime thereof.

A seventeenth invention provides a method for applying a surface treatment onto a furnace wall in accordance with the fourteenth invention, in which a main component of said material for forming said adhesion preventive film is represented by at least one component selected from a group consisting of ceramics of carbides, ceramics of nitrides, ceramics of borides and carbons.

An eighteenth invention provides a method for applying a surface treatment onto a furnace wall in accordance with the fourteenth invention, in which said material for forming said adhesion preventive film has been added with an oxidation inhibitor.

The type of the oxidation inhibitor is not limited to specific ones. For example, the oxidation inhibitor of $Al_2O_3$-

$SiO_2$-$TiO_2$ type may be employed. Other oxidation inhibitors, such as a zirconia glass and a glass containing borides may be used.

The amount of the oxidation inhibitor to be added may be not higher than 10% by weight, preferably not higher than 5% by weight. With the amount over 10% by weight, the clinker is more apt to adhere to the adhesion preventive film.

According to the first invention, the surface of the refractory is coated with the film for preventing the refractory deterioration. This can, in spite of its inexpensiveness, prevent the corrosion in the surface layer of the refractory possibly caused by the corrosive gas, such as chlorine gas, a sulfuric gas and a gas containing a variety type of alkaline components, and also makes it difficult for the substances that have been thermal-processed in the furnace and/or the ash contents from said substances to adhere to the surface of the refractory. Further, if said film for preventing the refractory deterioration is represented by a fine and dense ceramics film, for example, then the surface layer of the porous fireclay refractory may be coated with the film for preventing the refractory deterioration, which is harder than the fireclay refractory, thus enhancing the wear resistance of the refractory for the furnace member.

Further, according to each one of the second, the tenth and the fourteenth inventions, the adhesion preventive film defining an outer film of those two coating films over the refractory exhibits a high adhesion resistance against the substances that have been thermal-processed in the furnace or the ash contents from said substances. Owing to this, if the substances subject to thermal processing or the ash contents from said substance is brought into contact with the adhesion preventive film by chance, they hardly adhere to the adhesion preventive film, and even if they have adhered to the film, they might be stripped off by themselves. Further, if the adhesion preventive film defining the outermost layer of the refractory is represented by a fine and dense ceramics film, then the top layer of the porous fireclay refractory is coated with the adhesion preventive film which is harder than the fireclay refractory, so that the wear resistance of the refractory for the furnace member can be enhanced.

Further, even if the external corrosive gas could pass through the adhesion preventive film and thus attempt to corrode the refractory, the corrosive gas will be inhibited from entering into the refractory because of the presence of the corrosion resistant film (the inner film) on the surface of the refractory, which acts to block the corrosive gas effectively. Consequently, in the above refractory obtainable in low cost, not only the adhesion of the substances subject to thermal processing and the ash contents from the substances can be prevented but also the spalling in the surface layer region can be also prevented. This may result favorably in a longer service period of the material for the refractory member.

Furthermore, if the interface layers are interposed between the refractory and the corrosion resistant film as well as between the corrosion resistant film and the adhesion preventive film, respectively, each of said interface layers defining a gradient composition, in which a blending ratio of respective components of one to the other of said two adjacent members is proportionally reduced in accordance with the transition from one side to the other side of said two adjacent members, then the presence of those interface layers can help enhance the tight adhesion between the refractory for the furnace and those respective films.

Further, according to each one of the third, the fifth, the eleventh, the twelfth, the fifteenth and the seventeenth inventions, since the ceramics of inorganic oxides usable as the material for forming the corrosion resistant film and the ceramics of carbides, nitrides and borides as well as the carbons usable as the material for forming the adhesion preventive film are all inexpensive, the cost in association with the refractory for the furnace member and thus the furnace can be further reduced.

According to the refractory for the furnace member in accordance with the first invention, since the surface of the refractory is coated with the film for preventing the refractory deterioration, therefore in spite of its inexpensiveness, it can still act effectively to prevent the corrosion in the surface layer of the refractory otherwise caused by the corrosive gas, while making it difficult for the substances subject to thermal processing and/or the ash contents therefrom to adhere to the surface of the refractory. Still further, if the porous surface layer of the refractory is coated with such a film for preventing the refractory deterioration that is substantially harder than the refractory, the wear resistance of the refractory for the furnace member can be enhanced.

Further, according to the refractory for the furnace member in accordance with the second invention, the furnace that has employed the refractory for the furnace member in accordance with the ninth invention and the method for applying the surface treatment onto the furnace wall in accordance with the fourteenth invention, since the surface of the refractory is coated with the corrosion resistant film defining the inner film and the adhesion preventive film defining the outer film, this outer adhesion preventive film can prevent the adhesion of the substances subject to thermal processing and the ash contents therefrom to the refractory. On one hand, the corrosive gas that has passed through the adhesion preventive film can be blocked effectively by the inner corrosion resistant film, and thus not to enter the refractory. This can consequently prevent the spalling in the surface layer of the refractory. Further, if the porous surface layer of the refractory is coated with such an adhesion preventive film that is substantially harder and more fine and dense than the refractory, the wear resistance of the refractory for the furnace member can be enhanced.

Furthermore, since the ceramics of inorganic oxides usable as the material for forming the corrosion resistant film and the ceramics of carbides and the carbons usable as the material for forming the adhesion preventive film are all inexpensive, the cost in association with the refractory for the furnace member and thus the furnace employing said material can be further reduced.

**BRIEF DESCRIPTION OF THE DRAWINGS**

Fig. 1 is a sectional view of a surface layer region of a refractory for a furnace member applied to a furnace according to one embodiment of the present invention, illustrating in an enlarged scale; and

Fig. 2 is a longitudinal sectional view of a furnace according to one embodiment of the present invention.

**DESCRIPTION OF THE PREFERRED EMBODIMENTS OF THE PRESENT INVENTION**

A refractory for a furnace member, a furnace and a surface treating method of a furnace wall according to preferred embodiments of the present invention will now be described.

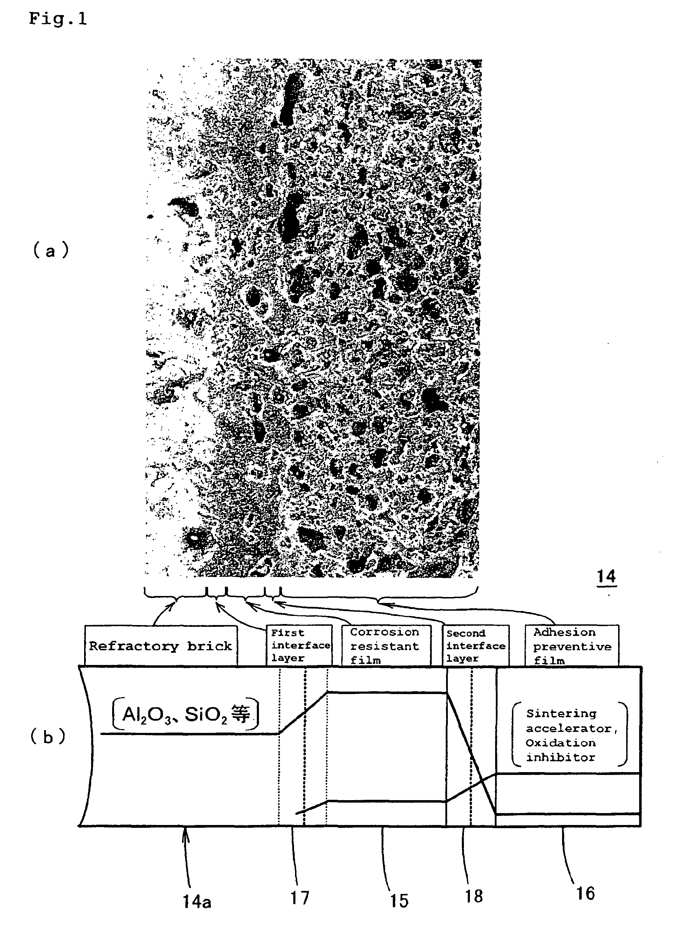

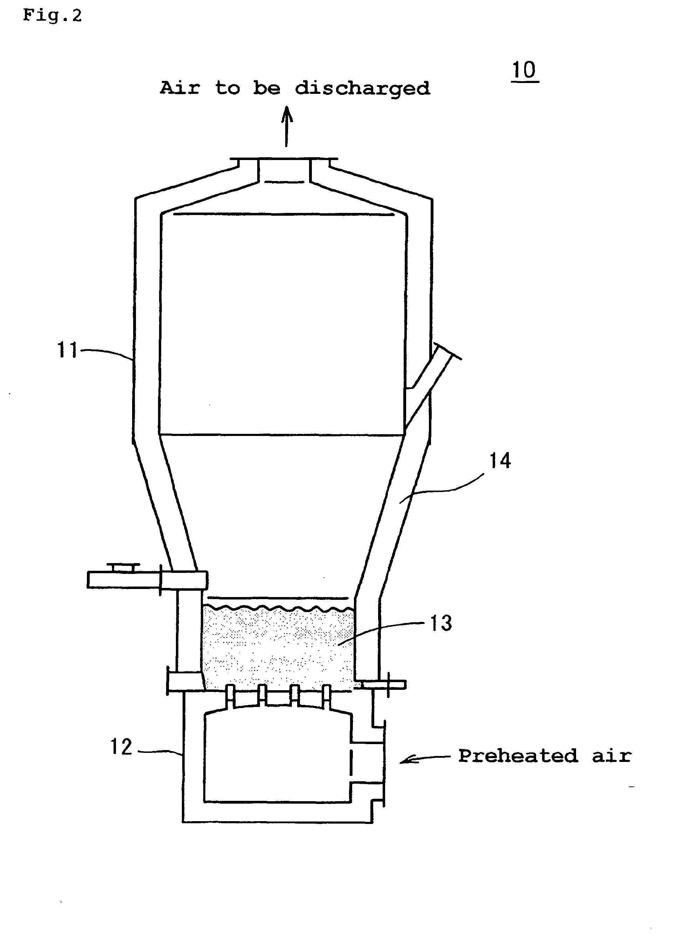

Referring to Fig. 1, (a) shows a sectional view of a surface layer region of a refractory for a furnace member, that has been applied to a furnace according to one embodiment of the present invention. In Fig. 1, (b) is a schematic diagram illustrating a composition of the section in the surface layer region of the refractory for the furnace member according to said one embodiment of the present invention. Fig. 2 is a longitudinal sectional view of a furnace according to one embodiment of the present invention.

In Fig. 2, reference numeral 10 generally designates a refuse incinerator of fluid bed type according to one embodiment of the present invention, wherein the refuse incinerator 10 comprises a blast box 12 disposed in a bottom portion of a cylindrical furnace body 11, into which a preheated air is blown, and a fluid bed 13 disposed above the blast box 12, in which the preheated air that has been supplied into the blast box 12 is blown up into the fluid bed 13 so as to burn garbage placed on the fluid bed 13. A furnace wall of the refuse incinerator 10 is made up of a plurality of refractory bricks 14 each stacked one on the other (refractory for a furnace member).

The refractory brick 14 will now be described in detail.

As shown in Figs. 1(a) and 1(b), the refractory brick 14 has a chamotte brick body (a fireclay refractor) 14a defined by SK-34, which are commonly used, and a shape of the brick is approximately a rectangular parallelepiped. A surface of the brick body 14a (an interior surface of the furnace) is coatedwith a corrosion resistant film 15 for preventing the corrosion in the surface layer of the brick body 14a by the corrosive gas and a adhesion preventive film 16 formed on a top of said corrosion resistant film for preventing clinker (ash content from garbage) that has been heated within the incinerator from adhering to the brick body 14a, each film having been laminated one on the other in the above sequence over the brick body 14a.

The corrosion resistant film 15, one of said two films, has been added with a sintering accelerator, and the adhesion preventive film 16, the other of said two films, has been added with an oxidation inhibitor. Further, a first interface layer 17 is formed between the brick body 14a and the corrosion resistant film 15, in which a ratio of blending amount of respective components of one to the other of said adjacent two members is gradually reduced in accordance with a transition from one side to the other side of said two adjacent members. Besides, a second interface layer 18 is similarly formed also between the corrosion resistant film 15 and the adhesion preventive film 16, in which a ratio of blending amount of respective components of one to the other of said two adjacent members is gradually reduced in accordance with a transition from one side to the other side of said two adjacent members.

The composition of the brick body 14a consists of $Al_2O_3$ (46.1% by weight), $SiO_2$ (47.2% by weight), $TiO_2$ (1.7% by weight), MgO (0.3% by weight) and others (4.7% by weight).

This brick body 14a has an apparent porosity of 26.4%. The apparent porosity refers to a representation by percentage of an opening void volume to a bulk volume. Besides, a linear thermal expansion rate of the brick body 14a at a heating temperature of 1000°C is 0.6%. In this regard, said linear thermal expansion rate is a factor indicative of a degree of expansion of the refractory in association with the temperature rise, and represented by percentage of an increase in a length of the refractory measured when a predetermined temperature has been reached to an original length of the refractory.

The composition of the corrosion resistant film 15, for the one obtained by using a corrosion resistant film forming material of SK-34/LAZST type in sol containing no sintering accelerator, consists of $Al_2O_3$ (50% by weight), $SiO_2$ (15% by weight), $ZrO_2$ (30% by weight), and $TiO_2$ (5% by weight). Further, the composition of the corrosion resistant film 15 represented by the one obtained by using a corrosion resistant film forming material of the SK-34/LAZSTG1 type in sol containing a sintering accelerator, consists of $Al_2O_3$ (48% by weight), $SiO_2$ (15% by weight), $ZrO_2$ (30% by weight), $TiO_2$ (5% by weight), and G2 (2% by weight). In either case of said SK-34/LAZST type or said SK-34/LAZSTG1 type, a content of solid component is 30%, an averaged particle size is 50nm, and a viscosity thereof is in a range of 150 to 200cP. In the above composition, the G2 represents the sintering accelerator consisting of $Al_2O_3$ (15% by weight), $SiO_2$ (53% by weight), $B_2O_3$ (9% by weight) and others (23% by weight). A softening point of the sintering accelerator is defined at 810°C and an averaged particle size thereof is not greater than 1 $\mu$m. If only added with the G2 by an amount of 2% by weight, but still at the operational temperature (800 to 1400°C) of the refuse incinerator, the corrosion resistant film 15 can be made more fine and dense.

The apparent porosity of the corrosion resistant film 15 of SK-34/LAZST type is 9.2%, and that of the corrosion resistant film 15 of SK-34/LAZSTG1 type is 4.1%. Each of those values is obtained in the brick body 14a when it is heated in the air at the temperature of 1000°C for 5 hours. Both of the above values are lower than the apparent porosity of the brick body 14a (which is 26.4%).

The reduction in the apparent porosity of the brick body 14a owing to the corrosion resistant film 15 formed thereon can be considered an outcome from the fact that the corrosion resistant film 15 has entered into and filled up pores in the surface region of the brick body 14a. Therefore, as the corrosion resistant film 15 becomes more fine and dense, the apparent porosity of the refractory brick 14 is reduced more, and thereby the corrosion resistance of the refractory brick 14 against the corrosive gas such as chlorine gas will be enhanced.

Besides, the linear thermal expansion rate of the corrosion resistant film 15 of SK-34/LAZST type at the temperature of 1000'C is 0.49%, and that of the corrosion resistant film 15 of SK-34/LAZSTG1 type is 0.51%, respectively, each of which is smaller than the linear thermal expansion rate of the brick body 14a (which is 0.6%). The fact that the linear thermal expansion rate of the corrosion resistant film 15 is small than that of the brick body 14a indicates that the durability of the corrosion resistant film 15 against the thermal deformation is great. This implies lesser possibility of the spalling to be developed, as compared to the conventional products.

To form this corrosion resistant film 15, the material for forming the corrosion resistant film is applied by means of spraying with the spray gun over the surface (interior face) of the brick body 14a defining the furnace wall of the refuse incinerator 10. The film thickness of the application maybe 100 $\mu$m. After that , it maybe dried at a temperature of 600°C by using an infrared heater for 5 minutes.

Almost all of the ceramics materials may react with the chlorine gas to produce chlorides having low melting and boiling points. If those chlorides are unstable ones having high standard Gibbs free energy, such as $Fe_sO_3$, CaO, MgO and so on, they are likely to vaporize or dissolve in water vapor and finally disappear. This disappearance could break the particles of the brick body 14a and the bonding among the particles of the brick body 14a, which would in turn stimulate the development of the spalling. However, since the corrosion resistant film is fine and dense, the formation thereof on the brick body 14a can suppress the moving rate of the chlorine into the inside of the refractory to thereby reduce the generation rate of the chlorides and thus inhibit the development of the spalling.

The composition of the adhesion preventive film 16 will now be described. This adhesion preventive film 16 is a SiC-C based adhesion preventive film and has been made from the material for forming the adhesion preventive film, as a base material, in the form of slurry consisting of silicon carbide and coke. Its specific composition consists of SiC (79% by weight), C (18% by weight) and $Al_2O_3$ (3% by weight). Further, the composition that has been further added with an oxidation inhibitor consists of SiC (77% by weight), C (17% by weight). $Al_2O_3$ (3% by weight), the oxidation inhibitor (1.5% by weight) and a dispersant/binder (1.5% by weight). Further, the composition for the case of the ceramics of nitrides consists of $Si_3N_4$ (50% by weight), C (40%by weight) and $Al_2O_3$ (10% by weight). The composition that has been further added with an oxidation inhibitor consists of $Si_3N_4$ (48% by weight), C (38% byweight) , $Al_2O_3$ (9% by weight), the oxidation inhibitor (2% by weight) and a dispersant/binder (3% by weight). The oxidation inhibitor employed herein is an $Al_2O_3$-$SiO_2$-$TiO_2$ based oxidation inhibitor. The primary composition of said oxidation inhibitor consists of $Al_2O_3$ (30% by weight), $SiO_2$ (40% by weight), $TiO_2$ (20% by weight), $B_2O_3$ (5% by weight), $ZrO_2$ (3% by weight) and $ZrB_2$ (2% by weight). As for the material for forming the adhesion preventive film of either type, the content of solid components maybe 60%, the viscosity 2500cP, the averaged particle size 15 $\mu$m and the film thickness 300 $\mu$m. Since the typical base material for the adhesion preventive film 16 is represented by silicon carbide and carbon, it is also effective to suppress the corrosion by the alkaline component.

The oxidation of the silicon carbide will take place by the conversion of the silicon carbide (molar weight 40) to the silicon oxide (molar weight 60) in accordance with the following reaction formulas (1) and (2).

$$SiC(s) + O_2(g) = SiO_2(s) + CO_2(g) \tag{1}$$

$$SiC(s) + CO_2(g) = SiO_2(s) + CO(g) \tag{2}$$

Based on the above reaction formulas, an oxidation rate of the silicon carbide has been determined from an increment in weight of the powder of the silicon carbide (by the following formula).

Oxidation rate of silicon carbide = (2 x increment in weight of

sample) / weight of silicon carbide film x 100%

The averaged particle size of the oxidation inhibitor is not greater than 0.02 μm. The oxidation rate of the adhesion preventive film 16 that has been added with said oxidation inhibitor by 2% by weight results in as small as 2.6% as compared to the oxidation rate of 26% of the adhesion preventive film added with no oxidation inhibitor. That is, oxidation inhibitor could successfully reduce the oxidizing velocity of the silicon carbide by about 90%.

To form this adhesion preventive film 16, the material for forming the adhesion preventive film is applied by way of spraying with the spray gun over the surface of the corrosion resistant film by an amount sufficient to make the film thickness of 300 μm. After that, the applied material is dried at a temperature of 600°C by using an infrared heater for 1 minute.

The first interface layer 17 and the second interface layer 18 may be formed automatically without applying any additional artificial operations but by laminating the corrosion resistant film 15 and the adhesion preventive film 16 with one on the other in this sequence over the surface of the brick body 14a as described above and then placing them under the operating circumstance of the refuse incinerator 10 at a normal operation temperature. That is, the heat within the incinerator during this operation effects the fusing and mixing of the end region of the brick body 14a in its corrosion resistant film 15 side and the end region of the corrosion resistant film 15 in its brick body 14a side so as to form the first interface layer 17. On the other hand, the heat within the incinerator during this operation also effects the fusing and mixing of the end region of the corrosion resistant film 15 in its adhesion preventive film 16 side and the end region of the adhesion preventive film 16 in its corrosion resistant film 15 side so as to form similarly the second interface layer 18.

Thus, with the aid of the base materials, silicon carbide and carbons, of the adhesion preventive film 16 defining the outer film for coating the brick body 14a, that are characterized in bad wettability to the clinker generated within the refuse incinerator 10, a high adhesion resistance can be obtained. Owing to this, even if the clinker comes in contact with the adhesion preventive film 16, it will be more difficult for the clinker to adhere to the adhesion preventive film 16, and even if the clinker adheres to the adhesion preventive film by chance, it may be more likely stripped off naturally. Further, since the adhesion preventive film 16 is the fine and dense ceramics film having the averaged particle diameter of 15 μm. the adhesion preventive film 16 can provide a higher durability for the refractory as compared to the conventional refractory having the porous surface layer. Consequently, the wear resistance of the refractory brick 14 can be enhanced.

Further, even if the corrosive gas such as chlorine gas had successfully passed through the adhesion preventive film 16 and attempted to corrode the brick body 14a, the corrosion resistant film 15 could block the chlorine gas, thus inhibiting effectively the penetration of the chlorine gas. As a result, in spite of the inexpensiveness, not only the adhesion of the clinker can be prevented but also the spalling in the surface layer of the brick body 14a can be prevented. Further, since the corrosion resistant film 15 has been distributed by wetting the porous surface layer of the brick body 14a, the film 15 can adhere rigidly over the surface layer of the brick body 14a.

That is, since the binding of the particles of the brick body 14a with the particles of the corrosion resistant film 15 has been enhanced, which would not be separated so easily, therefore the spalling due to a bursting thermal shock can be inhibited.

Still further, since the first interface layer 17 and the second interface layer 18 are interposed between the brick body 14a and the corrosion resistant film 15 as well as between the corrosion resistant film 15 and the adhesion preventive film 16. respectively, in each of which a blending ratio of respective components of one to the other of said two adjacent members is proportionally reduced in accordance with the transition from one side to the other side of said two adjacent members, therefore the presence of those interface layers 17 and 18 can increase the adhesions between the brick body 14 with the respective films 15 and 16.

Further, since the ceramics of inorganic oxides used as the material for forming the corrosion resistant film 15 and the ceramics of carbides and carbons used as the materials for forming the adhesion preventive film are all inexpensive, the cost required for the refractory brick 14 and the refuse incinerator 10 having the effect of the present invention can be further reduced.

It is to be appreciated that in one example, such a material applicable for forming the film for preventing the refractory deterioration may be fabricated, which consists of a mixture of the material used for forming the corrosion resistant film with the material used for forming the adhesion preventive film, and said material may be applied by means of spraying over the surface of the brick body 14a so as to form an one-layer type film for preventing the refractory deterioration, having both functions of the corrosion resistant film 15 and the adhesion preventive film 16, though not shown.

**Claims**

1. A refractory for a furnace member comprising: a refractory used for a furnace member; and a film for preventing refractory deterioration formed on a surface of said refractory used for said furnace member, which can prevent a corrosion in said refractory by a corrosive gas that is corrosive to said refractory and also can prevent substances that have been thermal-processed in said furnace and/or ash contents resultant from said substances from adhering onto said surface of said refractory.

2. A refractory for a furnace member comprising: a refractory used for a furnace member; an corrosion resistant film formed on a surface of said refractory for preventing a corrosion in said refractory by a corrosive gas that is corrosive to said refractory; and an adhesion preventive film formed on top of said corrosion resistant film for preventing substances that have been thermal-processed in said furnace and/or ash contents resultant from said substances from adhering onto said surface of said refractory.

3. A refractory for a furnace member in accordance with claim 2, in which a main component of said corrosion resistant film is represented by ceramics of inorganic oxides.

4. A refractory for a furnace member in accordance with claim 3, in which said ceramics of inorganic oxides contains at least one component selected from a group consisting of $SiO_2$, $ZrSiO_4$, $2SiO_2 \cdot 3Al_2O_3$, $ZrO_2$, $Cr_2O_3$, $TiO_2$, $MgAl_2O_4$ and $B_2O_3$.

5. A refractory for a furnace member in accordance with claim 2, in which a main component of said adhesion preventive film is represented by at least one component selected from a group consisting of ceramics of carbides, ceramics of nitrides, ceramics of borides and carbons.

6. A refractory for a furnace member in accordance with claim 5, in which said ceramics of carbides contain at least one component selected from a group consisting of SiC, ZrC, TiC, $B_4C$, $W_2C$ and WC.

7. A refractory for a furnace member in accordance with claim 5, in which said ceramics of nitrides contain at least one component selected from a group consisting of $Si_3N_4$, TiN, BN, and ZrN.

8. A refractory for a furnace member in accordance with claim 5, in which said ceramics of borides contain at least one component selected from a group consisting of $B_4C$, BN, $TiB_2$, $CrB_2$, $ZrB_2$ and $SiB_2$.

9. A refractory for a furnace member in accordance with claim 5, in which said adhesion preventive film has been added with an oxidation inhibitor.

10. A furnace comprising: a refractory defining a furnace wall; an corrosion resistant film formed on a surface of said refractory for preventing a corrosion in said refractory by a corrosive gas that is corrosive to said refractory; and an adhesion preventive film formed on top of said corrosion resistant film for preventing substances that have been thermal-processed in said furnace or ash contents resultant from said substances from adhering onto said surface of said refractory.

11. A furnace in accordance with claim 10, in which a main component of said corrosion resistant film is represented by ceramics of inorganic oxides.

12. A furnace in accordance with claim 10, in which a main component of said adhesion preventive film is represented by at least one component selected from a group consisting of ceramics of carbides, ceramics of nitrides, ceramics of borides and carbons.

13. A furnace in accordance with any one of claims 10 through 12, in which said furnace is represented by one furnace selected from a group consisting of a refuse incinerator, a cement burning furnace, an annealing furnace, a heating furnace and a steel making furnace.

14. A method for applying a surface treatment onto a furnace wall comprising the processes of:

applying, by way of spraying, a material for forming a corrosion resistant film over a surface of a refractory defining a furnace wall to form an corrosion resistant film for preventing a corrosion in said refractory by a corrosive gas that is corrosive to said refractory;

applying, by way of spraying, a material for forming an adhesion preventive film on top of said corrosion resistant film obtained in the previous process to form an adhesion preventive film for preventing substances that have been thermal-processed in a furnace and/or ash contents resultant from said substances from adhering onto said surface of said refractory; and

drying said applied material for forming said adhesion preventive film.

**15.** A method for applying a surface treatment onto a furnace wall in accordance with claim 14, in which a main component of said material for forming said corrosion resistant film is represented by ceramics of inorganic oxides.

**16.** A method for applying a surface treatment onto a furnace wall in accordance with claim 14, in which said material for forming said corrosion resistant film has been added with a sintering accelerator.

**17.** A method for applying a surface treatment onto a furnace wall in accordance with claim 14, in which a main component of said material for forming said adhesion preventive film is represented by at least one component selected from a group consisting of ceramics of carbides, ceramics of nitrides, ceramics of borides and carbons.

**18.** A method for applying a surface treatment onto a furnace wall in accordance with claim 14, in which said material for forming said adhesion preventive film has been added with an oxidation inhibitor.

Fig.1

(a)

<u>14</u>

Refractory brick | First interface layer | Corrosion resistant film | Second interface layer | Adhesion preventive film

(b)

$\left[ Al_2O_3 \text{、} SiO_2 \text{等} \right]$

$\left[ \begin{array}{l} \text{Sintering} \\ \text{accelerator,} \\ \text{Oxidation} \\ \text{inhibitor} \end{array} \right]$

14a          17          15          18          16

Fig.2

Air to be discharged

<u>10</u>

11

14

13

12

Preheated air

## INTERNATIONAL SEARCH REPORT

| International application No. |
| --- |
| PCT/JP02/10348 |

| A. CLASSIFICATION OF SUBJECT MATTER |
| --- |
| Int.Cl⁷ C04B41/85, F27D1/00 |

According to International Patent Classification (IPC) or to both national classification and IPC

| B. FIELDS SEARCHED |
| --- |
| Minimum documentation searched (classification system followed by classification symbols)<br>    Int.Cl⁷ C04B41/85, F27D1/00 |

Documentation searched other than minimum documentation to the extent that such documents are included in the fields searched
Jitsuyo Shinan Koho          1926–1996   Toroku Jitsuyo Shinan Koho   1994–2002
Kokai Jitsuyo Shinan Koho    1971–2002   Jitsuyo Shinan Toroku Koho   1996–2002

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 49-119909 A   (Akechi Taika Renga Kabushiki Kaisha),<br>15 November, 1974 (15.11.74),<br>Page 1, left column, line 1 to page 2, upper right column, line 4<br>(Family: none) | 1<br>2-9,10-13,<br>14-18 |
| Y | JP 04-119980 A   (Nippon Steel Corp.),<br>21 April, 1992 (21.04.92),<br>Page 1, left column, line 1 to page 3, upper left column, line 4   (Family: none) | 2-9,10-13,<br>14-18 |
| A | JP 05-261500 A   (Nippon Steel Corp.),<br>12 October, 1993 (12.10.93),<br>Page 2, column 1, lines 2 to 7, 35 to column 2, line 15; page 3, column 3, lines 9 to 15<br>(Family: none) | 1-9,10-13,<br>14-18 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    24 October, 2002 (24.10.02) | Date of mailing of the international search report<br>    12 November, 2002 (12.11.02) |
| --- | --- |
| Name and mailing address of the ISA/<br>    Japanese Patent Office | Authorized officer |
| Facsimile No. | Telephone No. |

Form PCT/ISA/210 (second sheet) (July 1998)

14

## INTERNATIONAL SEARCH REPORT

International application No.

PCT/JP02/10348

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2000-319079 A (Shinagawa Refractories Co., Ltd.), 12 November, 2000 (12.11.00), Page 2, column 1, lines 2 to 18; page 3, column 3, lines 39 to 44; column 4, lines 26 to 28 (Family: none) | 1-9,10-13, 14-18 |
| A | JP 06-144959 A (Mitsubishi Materials Corp.), 24 May, 1994 (24.05.94), Page 2, column 1, lines 2 to 38; column 2, lines 14 to 40 (Family: none) | 1-9,10-13, 14-18 |
| A | JP 56-98409 A (Nippon Steel Corp.), 07 August, 1981 (07.08.81), Page 1, left column, lines 5 to 7 (Family: none) | 1-9,10-13, 14-18 |
| A | JP 57-68173 A (Junji MITANI), 26 April, 1982 (26.04.82), Page 1, left column, lines 5 to 16 (Family: none) | 10-13,14-18 |
| A | JP 11-166715 A (Tokyo Yogyo Kabushiki Kaisha), 22 June, 1999 (22.06.99), Page 2, column 1, lines 2 to 12 (Family: none) | 10-13,14-18 |

Form PCT/ISA/210 (continuation of second sheet) (July 1998)